# EUROPEAN PATENT APPLICATION

(11) **EP 4 120 453 A1**
(43) Date of publication of application: **18.01.2023**
(21) Application number: 21856310.4
(22) Date of filing: 26.07.2021
(51) Int. Cl.: H01M 50/20, H01M 10/653

(54) **BATTERY MODULE AND BATTERY PACK INCLUDING SAME**

(30) Priority: 14.08.2020 KR 20200102355
(71) Applicant: LG Energy Solution, Ltd., Seoul 07335 (KR)
(72) Inventor: JEON, Hyun Wook, Daejeon 34122 (KR); PARK, Jinju, Daejeon 34122 (KR); BAEK, Seung Ryul, Daejeon 34122 (KR); NO, Yuseon, Daejeon 34122 (KR)
(74) Representative: Plasseraud IP
(86) International application number: PCT/KR2021/095074
(87) International publication number: WO 2022/035304

(57) **Abstract**

A battery module according to one embodiment of the present disclosure includes a battery cell stack in which a plurality of battery cells are stacked; a plate-shaped lower plate located under the battery cell stack; a module frame for covering an upper surface and both side surfaces of the battery cell stack; and a thermal conductive resin layer located between the lower plate and the battery cell stack.

## Description

### [TECHNICAL FIELD]

### Cross Citation with Related Application(s)

This application claims the benefit of Korean Patent Application No. 10-2020-0102355 filed on August 14, 2020 with the Korean Intellectual Property Office, the disclosure of which is incorporated herein by reference in its entirety.

The present disclosure relates to a battery module and a battery pack including the same, and more particularly, to a battery module that can adjust the amount of thermal conductive resin used, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, a lithium secondary battery, and the like. Among them, the lithium secondary battery has come into the spotlight because they have advantages over nickel-based secondary batteries, for example, hardly exhibiting memory effects and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate each coated with the positive electrode active material and the negative electrode active material are disposed with a separator being interposed between them, and a battery case that seals and houses the electrode assembly together with an electrolyte solution.

Generally, the lithium secondary battery may be classified based on the shape of the exterior material into a can type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery module, a large number of battery cells are connected to each other in series or in parallel to form a battery cell stack, thereby improving capacity and output. In addition, one or more battery modules may be mounted together with various control and protection systems such as BMS (battery management system) and a cooling system to form a battery pack.

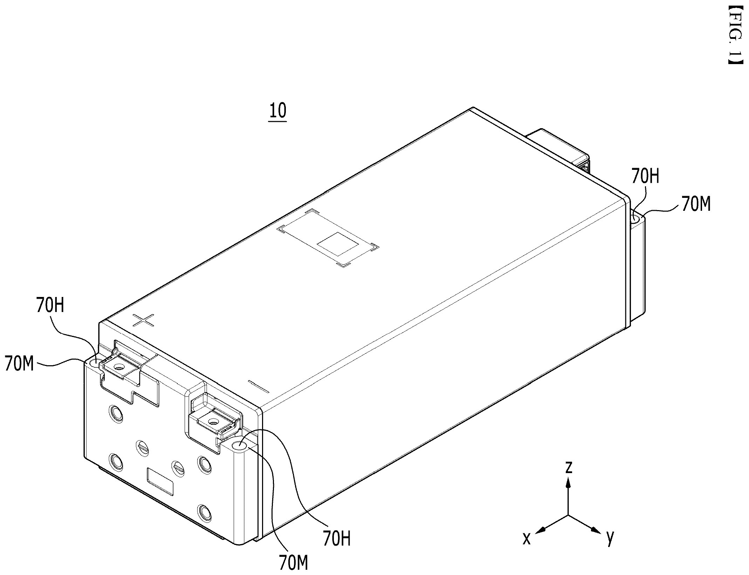

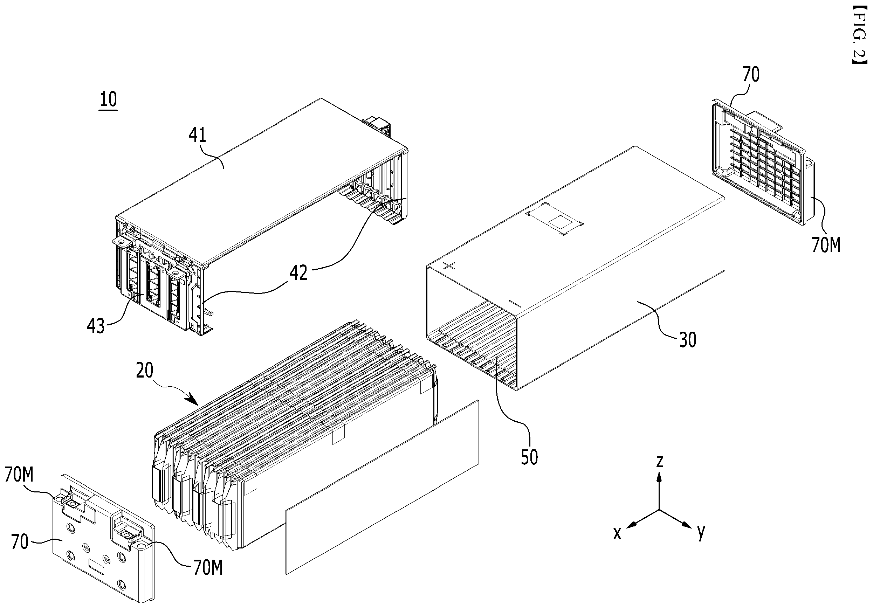

Fig. 1 is a perspective view of a conventional battery module, and Fig. 2 is an exploded perspective view of the battery module of Fig. 1.

Referring to Figs. 1 and 2, a conventional battery module 10 includes a battery cell stack 20 formed by stacking battery cells, a mono frame 30 for housing the battery cell stack 20, and a thermal conductive resin layer 50 located between the battery cell stack 20 and the lower surface of the mono frame 30. The mono frame 30 may be a metal plate material of which a front surface and a rear surface are opened, and the end plate 70 may cover the opened front and rear surfaces of the mono frame 30.

Meanwhile, the conventional battery module 10 may further include an upper cover 41 and a busbar frame 42, which are housed in the mono frame 30 together with the battery cell stack 20. The upper cover 41 is located on the upper part of the battery cell stack 20 to prevent damage to the battery cell stack 20 when the battery cell stack 20 is inserted into the mono frame 30. The busbar frame 42 may be located on the front surface and rear surface of the battery cell stack 20, respectively. A busbar 43 connected to electrode leads of battery cells constituting the battery cell stack 20 may be mounted on the busbar frame 42.

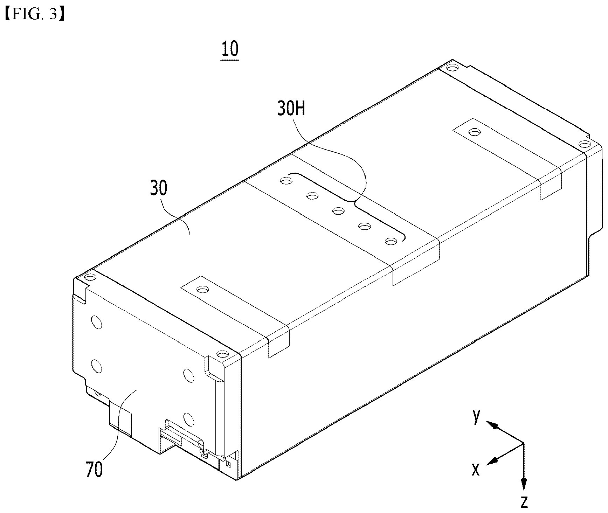

Meanwhile, a thermal conductive resin can be injected between the battery cell stack 20 and the lower surface of the mono frame 30 to form a thermal conductive resin layer 50, and such a thermal conductive resin layer 50 may transfer heat generated from the battery cell stack 20 to the bottom of the battery module 10. At this time, the method of forming the thermal conductive resin layer 50 in the conventional battery module 10 will be described with reference to Fig. 3.

Fig. 3 is a perspective view showing a state in which the lower surface of the battery module of Fig. 1 is inverted so as to face upward.

Referring to Figs. 1 to 3, an injection hole 30H for injecting the thermal conductive resin may be formed on the lower surface of the conventional battery module 10, that is, the lower surface of the mono frame 30.

Specifically, the battery cell stack 20, the upper cover 41, the busbar frame 42 and the like are housed in the mono frame 30, and then an end plate 70 covers the opened front and rear surfaces of the mono frame 30. At this time, the mono frame 30 and the end plate 70 may be joined to each other by a method such as welding. After that, the thermal conductive resin may be injected via an injection hole 30H to form a thermal conductive resin layer 50 between the battery cell stack 20 and the lower surface of the mono frame 30.

However, since the injection is performed after the battery cell stack 20 is first housed, variations of the injection amount of the thermal conductive resin are large. Further, in the process of injecting the thermal conductive resin, it is possible to inject more than a predetermined fixed amount due to clearance or the like of the parts in the battery module, whereby the production cost of the battery module may increase, which may adversely affect profitability.

Further, in the injection process, the battery cell stack 20 may be pushed toward the upper surface of the mono frame 30 by the pressure of the thermal conductive resin, which may affect the dimensions of major parts such as a terminal busbar or the like.

Further, since the injection is performed via the injection hole 30H, it is difficult for the thermal conductive resin layer 50 to form a constant thickness between the battery cell stack 20 and the lower surface of the mono frame 30. This can be a cause of a variation in heat transfer performance by each zone.

Therefore, there is a need to develop a technology for a battery module capable of appropriately adjusting the amount of thermal conductive resin used.

### [DETAILED DESCRIPTION OF THE INVENTION]

### [Technical Problem]

It is an object of the present disclosure to provide a battery module with a new structure capable of injecting an appropriate amount of a thermal conductive resin, and a battery pack including the same.

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery module comprising: a battery cell stack in which a plurality of battery cells are stacked; a plate-shaped lower plate located under the battery cell stack; a module frame for covering an upper surface and both side surfaces of the battery cell stack; and a thermal conductive resin layer located between the lower plate and the battery cell stack.

The module frame may include a first side surface part and a second side surface part for covering the both side surfaces of the battery cell stack; and a ceiling part for covering the upper surface of the battery cell stack.

The first side surface part, the second side surface part and the ceiling part may be integrally formed.

A first edge part and a second edge part of the lower plate facing each other may be joined to the first side surface part and the second side surface part, respectively.

The first edge part and the second edge part may be weld-joined to the first side surface part and the second side surface part, respectively.

The lower plate may include a mounting part, and the mounting part may be formed on a first edge part and a second edge part of the lower plate facing each other.

A mounting hole may be formed in the mounting part, and the mounting part may be extended in parallel to one surface of the lower plate.

The thermal conductive resin layer may be formed by applying a thermal conductive resin to the lower plate.

The battery module may further include a compression pad section that surrounds the thermal conductive resin layer.

The battery cell may include electrode leads protruding in mutually opposite directions and a protrusion part formed on one edge of the battery cell. The protrusion part may be located closer to one end part of the lower plate in a direction in which one of the electrode leads is protruded than the compression pad section.

The lower plate may include a stepped part formed at the one end part of the lower plate, and the protrusion part may be located above the stepped part.

A thickness of the thermal conductive resin layer may be equal to or thinner than a thickness of the compression pad section.

The thermal conductive resin layer may include a first thermal conductive resin layer and a second thermal conductive resin layer that are located apart from each other.

The battery module may further include a first compression pad section surrounding the first thermal conductive resin layer and a second compression pad section surrounding the second thermal conductive resin layer.

### [Advantageous Effects]

According to embodiments of the present disclosure, the application of the thermal conductive resin in an appropriate amount can be realized through the structure of the plate-shaped lower plate and the module frame.

Also, the dimensional stability in the height direction of the battery module can be easily secured by adjusting the application amount of the thermal conductive resin and controlling the thickness of the compression pad section.

Further, the mounting structure is applied to the plate-shaped lower plate, thereby capable of realizing free design and simplification of a shape.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view of a conventional battery module;
Fig. 2 is an exploded perspective view of the battery module of Fig. 1;
Fig. 3 is a perspective view showing a state in which the lower surface of the battery module of Fig. 1 is inverted so as to face upward;
Fig. 4 is a perspective view of a battery module according to an embodiment of the present disclosure;
Fig. 5 is an exploded perspective view of the battery module of Fig. 4 in which the end plate is removed;
Fig. 6 is an exploded perspective view showing a battery cell stack, a busbar frame, and a busbar included in the battery module of Fig. 5;
Fig. 7 is a perspective view of a battery cell included in the battery cell stack of Fig. 6;
Fig. 8 is a perspective view of a module frame according to a comparative example of the present disclosure;
Fig. 9 is a perspective view of a lower plate according to an embodiment of the present disclosure;
Fig. 10 is a front view of the battery module of Fig. 4 as viewed along the -x axis on the yz plane;
Fig. 11 is a perspective view showing a battery cell stack and a lower plate according to an embodiment of the present disclosure;
   (a) of Fig. 12 is a cross-sectional view taken along the cutting line A-A' of Fig. 11;
   (b) of Fig. 12 is a cross-sectional view taken along the cutting line B-B' of Fig. 11;
Fig. 13 is a perspective view showing a lower plate according to a modified embodiment of the present disclosure;
   (a) of Fig. 14 is a cross-sectional view taken along the cutting line C-C' of Fig. 13; and
   (b) of Fig. 14 is a cross-sectional view taken along the cutting line D-D' of Fig. 13.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

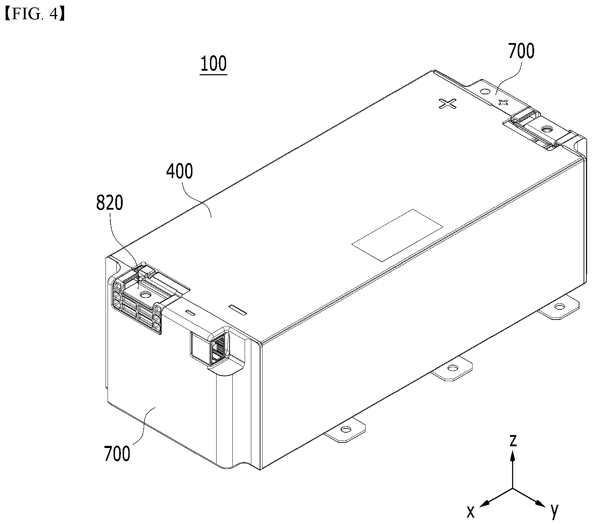

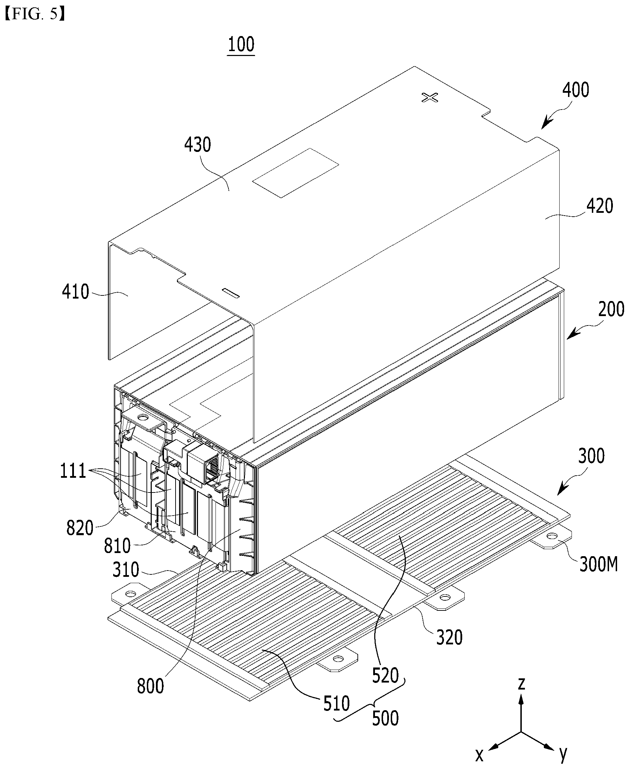

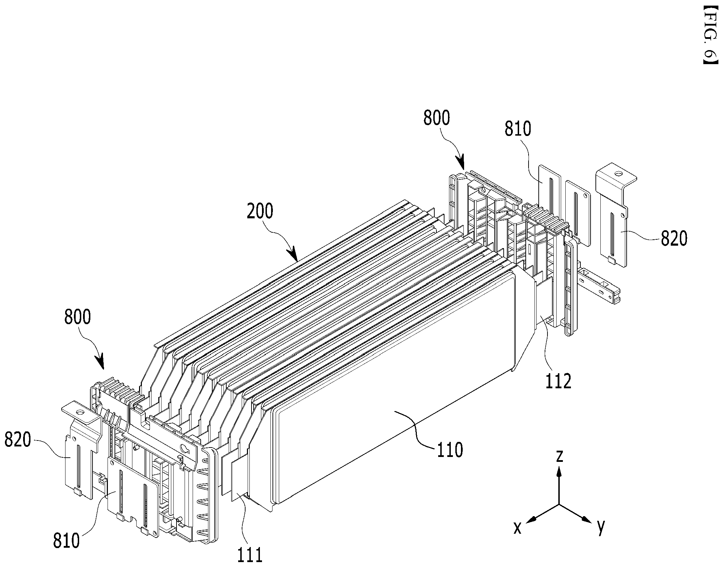

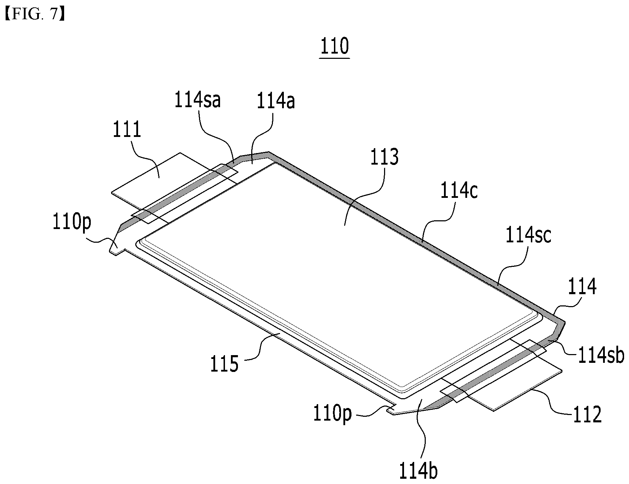

Fig. 4 is a perspective view of a battery module according to an embodiment of the present disclosure. Fig. 5 is an exploded perspective view of the battery module of Fig. 4 in which the end plate is removed. Fig. 6 is an exploded perspective view showing a battery cell stack, a busbar frame, and a busbar included in the battery module of Fig. 5. Fig. 7 is a perspective view of a battery cell included in the battery cell stack of Fig. 6.

Referring to Figs. 4 to 6, a battery module 100 according to an embodiment of the present disclosure includes a battery cell stack 200 in which a plurality of battery cells 110 are stacked, a plate-shaped lower plate 300 located under the battery cell stack 200, a module frame 400 for covering an upper surface and both side surfaces of the battery cell stack 200, and a thermal conductive resin layer 500 located between the lower plate 300 and the battery cell stack 200. Further, the battery module 100 may further include an end plate 700 located on the front surface and rear surface of the battery cell stack 200, respectively, and an insulating cover having electrical insulation (not shown) may be located between the battery cell stack 200 and the end plate 700.

First, the battery cell 110 is preferably a pouch-type battery cell, and may be formed in a rectangular sheet-like structure. For example, the battery cell 110 according to the present embodiment has a structure in which the two electrode leads 111 and 112 face each other and protrude from one end part and the other end part, respectively.

In particular, referring to Fig. 7, the battery cell 110 according to the present embodiment has a structure in which two electrode leads 111 and 112 face each other and protrude from one end part 114a and the other end part 114b of the cell body 113, respectively. More specifically, the electrode leads 111 and 112 are connected to the electrode assembly (not shown), and protrude from the electrode assembly (not shown) to the outside of the battery cell 110.

Meanwhile, the battery cell 110 can be manufactured by joining both end parts 114a and 114b of a cell case 114 and one side part 114c connecting them in a state in which an electrode assembly (not shown) is housed in a cell case 114. In other words, the battery cells 110 according to the present embodiment have a total of three sealing parts 114sa, 114sb, 114sc, the sealing parts 114sa, 114sb, 114sc have a structure in which it is sealed by a method such as heat fusion, and the remaining other one side part can be composed of a connection part 115. The cell case 114 can be composed of a laminate sheet including a resin layer and a metal layer.

Further, the connection part 115 may extend long along one edge of the battery cell 110, and a protrusion part 110p of the battery cell 110 called a bat-ear may be formed at an end part of the connection part 115. However, the protrusion part 110p is an exemplary structure, and the battery cell 110 according to another embodiment of the present disclosure may have a form in which a protrusion part is not formed and the connection part 115 extends in a straight line.

The battery cell 110 may be configured by a plurality of numbers, and the plurality of battery cells 110 may be stacked so as to be electrically connected to each other, thereby forming a battery cell stack 200. Particularly, as shown in Fig. 6, the plurality of battery cells 110 can be stacked along the y-axis direction. Thereby, one electrode lead 111 of the battery cells 110 may be protruded toward the x-axis direction, and the other electrode lead 112 may be protruded toward the -x-axis direction.

The lower plate 300 is a plate-shaped member, and the battery cell stack 200 may be seated thereon. The module frame 400 may include a first side surface part 410 and a second side surface part 420 that cover both side surfaces (y-axis direction and -y-axis direction) of the battery cell stack 200, and a ceiling part 430 that covers the upper surface (z-axis direction) of the battery cell stack 200. Specifically, the first side surface part 410 and the second side surface part 420 may be extended downward from both end parts of the ceiling part 430. Further, the first side surface part 410, the second side surface part 420, and the ceiling part 430 may be integrally formed. The module frame 400 may form an n-shaped cross-section cut along the yz plane.

The lower plate 300 and the module frame 400 can be joined by welding or the like in a state in which the corresponding corner portions are in contact with each other, thereby forming a structure that covers the battery cell stack 200 vertically and horizontally. Specifically, the first edge part 310 and the second edge part 320 of the lower plate 300 facing each other may be abutted and joined with the first side surface part 410 and the second side surface part 420, respectively. The joining method is not particularly limited, but it is preferable that the first edge part 310 and the second edge part 320 are weld-joined to the first side surface part 410 and the second side surface part 420, respectively.

The battery cell stack 200 can be physically protected through the lower plate 300 and the module frame 400. For this purpose, the lower plate 300 and the module frame 400 may include a metal material having a predetermined strength.

When the battery cell stack 200 is housed in the lower plate 300 and the module frame 400, end plates 700 may be located on the opened front surface (x-axis direction) and rear surface (-x-axis direction) of the battery cell stack 200. That is, the end plate 700 may be formed such that it is located on the front surface (x-axis direction) and rear surface (-x-axis direction) of the battery cell stack 200 and covers the battery cell stack 200. The end plate 700 may be joined to the lower plate 300 and the module frame 400 by a method such as welding.

The thermal conductive resin layer 500 may be formed by applying a thermal conductive resin to the lower plate 300. Specifically, the thermal conductive resin may be applied onto the lower plate 300, the battery cell stack 200 may be located thereon, and then the thermal conductive resin may be cured to form the thermal conductive resin layer 500.

The thermal conductive resin may include a thermal conductive adhesive material, and specifically, may include at least one of silicone material, urethane material, and acrylic material. The thermal conductive resin is a liquid during application but is cured after application, so that it can perform the role of fixing a plurality of battery cells 110 constituting the battery cell stack 200. Further, since the thermal conductive resin has excellent heat transfer properties, heat generated from the battery module 110 can be quickly transferred to the lower side of the battery module 100, thereby preventing overheating of the battery module 100. Heat generated from the battery cell 110 may be transferred to the outside of the battery module 100 via the thermal conductive resin layer 500, the lower plate 300, and a heat sink (not shown).

Meanwhile, the thermal conductive resin layer 500 may include a first thermal conductive resin layer 510 and a second thermal conductive resin layer 520 that are located apart from each other. Specifically, the first thermal conductive resin layer 510 and the second thermal conductive resin layer 520 may be disposed apart from each other along the direction in which the electrode leads 111 and 112 protrude from the battery cell 110. Here, the direction in which the electrode leads 111 and 112 protrude from the battery cell 110 may correspond to the x-axis direction or the -x-axis direction.

When charge and discharge of the battery cell are repeatedly performed, a lot of heat is generated in portions adjacent to the electrode leads 111 and 112. The thermal conductive resin layer 500 according to the present embodiment is not formed on the entire lower plate 300, but can be composed of the first heat conductive resin layer 510 and the second heat conductive resin layer 520 so as to correspond to the portion of the battery cell 110 where heat generation is excessive. Through this structure, the cooling and heat dissipation performance can be increased while saving raw materials.

Further, with respect to the battery cell 110 having a large difference in the degree of heat generation for each portion, the thermal conductive resin layer formed on the entirety of the lower plate 300 is difficult to eliminate the temperature deviation between the portions of the battery cells 110. Unlike the same, since the battery module 100 according to the present embodiment includes the first thermal conductive resin layer 510 and the second thermal conductive resin layer 520, heat dissipation can be effectively performed at both end parts of the battery cell 110 where heat generation is excessive, and the temperature deviation between the portions of one battery cell 110 can be minimized. Since the temperature deviation between the respective portions of the battery cell 110 ultimately causes a decrease in the performance of the battery module 100, the first thermal conductive resin layer 510 and the second thermal conductive resin layer 520 according to the present embodiment may contribute to improving the performance and lifespan of the battery module.

At this time, referring to Figs. 1 to 3 again, in the conventional battery module 10, a thermal conductive resin is injected via an injection hole 30H to form a thermal conductive resin layer 50 between the lower surface of the battery cell stack 20 and the lower surface of the mono frame 30, and therefore, it is difficult to precisely form the thermal conductive resin layer 50. Specifically, the thermal conductive resin may be excessively injected over a predetermined amount due to clearance of parts inside the battery module. Further, with such an injection method, it is difficult to form the first thermal conductive resin layer 510 and the second thermal conductive resin layer 520 spaced apart from each other as in the present embodiment.

Unlike the same, since the thermal conductive resin layer 500 according to the present embodiment is formed by applying the thermal conductive resin onto the lower plate 300, the possibility of excessively using the thermal conductive resin is low. Further, it has the advantage of being able to freely design and configure the thermally conductive resin layer as in the first thermal conductive resin layer 510 and the second thermal conductive resin layer 520. Further, since this is not an injection method, it is advantageous for uniformly forming the thickness of the thermal conductive resin layer 500. In addition, since the lower plate 300 is formed in a plate shape, it is easy to uniformly apply the thermal conductive resin up to the edge part thereof.

Meanwhile, although not specifically shown in the figure, an insulating film or the like may be disposed on the lower plate 300 between the first thermal conductive resin layer 510 and the second thermal conductive resin layer 520 .

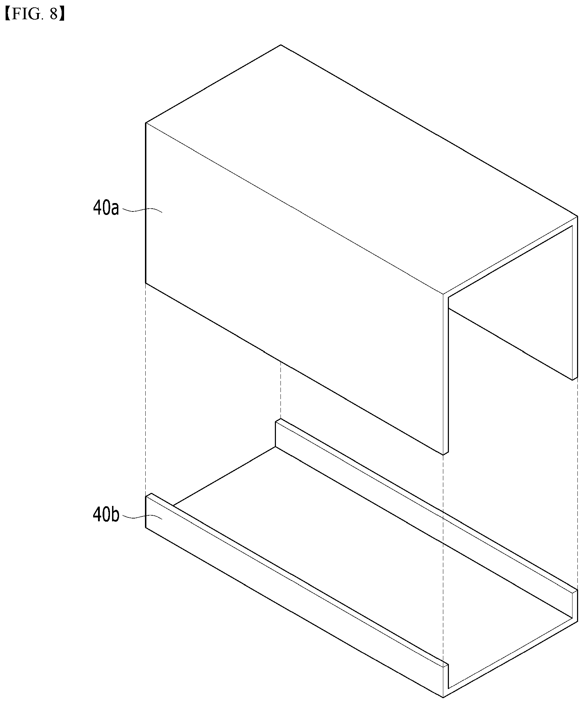

Next, advantages of the lower plate 300 and the module frame 400 according to the present embodiment will be described with reference to Fig. 8 and the like.

Fig. 8 is a perspective view of a module frame according to a comparative example of the present disclosure.

Referring to Fig. 8, a module frame structure in which an upper frame 40a and a lower frame 40b are combined may be proposed as a comparative example of the present disclosure. Both the upper frame 40a and the lower frame 40b may have side wall parts, wherein the upper frame 40a may form an n-shape in the cross-section, and the lower frame 40b may form a u-shape in the cross section. As described above, since the lower plate 300 according to the present embodiment is configured in a plate shape, it is easy to uniformly apply the thermal conductive resin up to the edge part. On the other hand, since the lower frame 40b according to the comparative example has two side wall parts facing upward, such side wall parts may become interfering factors in the process of applying the thermal conductive resin.

Further, when the upper frame 40a and the lower frame 40b are joined by a method such as welding, the joined part is located at the center of the side surface. In such joining, the thickness, squareness, width between the side wall parts, etc. of the frame must be precisely controlled without errors so that the side wall parts of the upper frame 40a and the side wall parts of the lower frame 40b can come into contact with each other. Otherwise, the side wall part of the upper frame 40a and the side wall part of the lower frame 40b do not come into contact with each other and thus are likely to be misaligned. In order to prevent this misalignment, the thickness of the upper frame 40a and the lower frame 40b must be increased, which is not favorable in terms of space efficiency or battery capacity of the battery module. On the other hand, as shown in Fig. 5, the first and second side surface parts 410 and 420 of the module frame 400 according to the present embodiment are advantageous for abutting with the plate-shaped lower plate 300 formed in a widely supporting structure. In addition, the risk of misalignment with respect to the plate-shaped lower plate 300 is low and thus the thickness of the module frame 400 can be thinly formed, which is advantageous in terms of space efficiency or battery capacity of the battery module.

Further, if the joining portion between the upper frame 40a and the lower frame 40b is located in the center of the side surface, the internal battery cells and the like are likely to be damaged by the penetration of the laser when laser welding or the like is performed. On the other hand, according to the present embodiment, since the first and second edge parts 310 and 320 of the lower plate 300 are weld-joined to the first and second side surface parts 410 and 420, respectively, welding can be performed so to not to be penetrated by a laser.

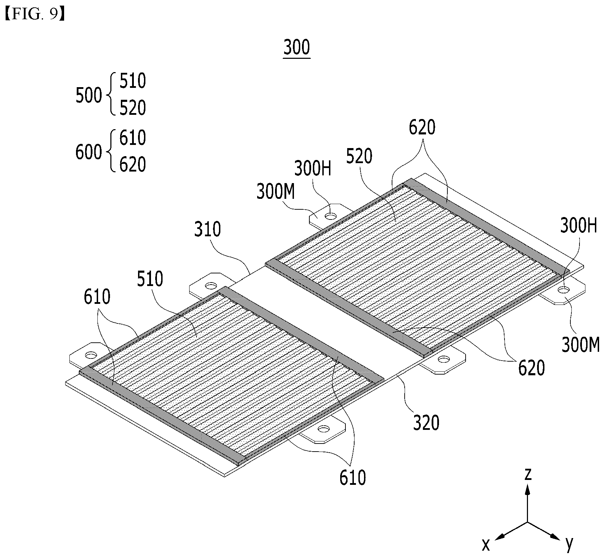

Next, a mounting part according to an embodiment of the present disclosure will be described with reference to Fig. 9 and the like.

Fig. 9 is a perspective view of a lower plate according to an embodiment of the present disclosure. Specifically, the lower plate included in the battery module of Fig. 5 is shown in an enlarged manner.

Referring to Figs. 5 and 9, the lower plate 300 according to the present embodiment may include a mounting part 300M, and such a mounting portion 300M may be formed on the first edge part 310 and the second edge part 320 of the lower plate 300 facing each other. The number of mounting portions 300M is not particularly limited, and as shown in the figure, it can be configured by a plurality of numbers for each of the first and second edge parts 310 and 320.

The battery module 100 according to the present embodiment may be gathered by a plurality of numbers to form a battery pack, and each battery module 100 can be fixed to a structure such as a pack frame (not shown) of the battery pack via a mounting part 300M. Specifically, a mounting hole 300H is formed in the mounting part 300M, and the mounting part 300M may be extended in parallel to one surface of the lower plate 300. A fastening structure such as a bolt and a nut is applied between the mounting hole 300H and the pack frame, so that the battery module 100 can be fixed to the pack frame.

Referring to Figs. 1 and 2 again, in the case of the conventional battery module 10, it is difficult to provide the mounting part 70M and the mounting hole 70H to the mono frame 30 or the like, so that there is no choice but to form the mounting part 70M on the end plate 70. The lower plate 300 of the plate-shaped structure according to the present embodiment can form the mounting part 300M only by cutting from the plate material serving as the base material, while in order to form the mounting part 70M on the mono frame 30 or the like, a complicated process such as bending, additional molding or joining is inevitably required. Thereby, in the conventional battery module 10, it is common to form a mounting part 70M on the end plate 70 instead of the mono frame 30 or the like. After all, the conventional mounting part 70M was formed only in both end parts of the end plate 70, that is, in a restricted portion called four corners with respect to the battery module 10, and the number thereof is also inevitably restricted. Unlike the same, the plate-shaped lower plate 300 according to the present embodiment easily forms the mounting part 300M, and the position or number of the mounting parts 300M can be set more freely. As an example, the number of mounting parts 300M can be increased and thus, the degree of fixing of the battery module 100 can be increased. In the design of the battery module 100 and the battery pack including the same, the position of the mounting part 300M can be adjusted to reduce the restrictions. Further, the shape of the end plate 700 can be simplified, and free design is possible.

Next, a compression pad section according to an embodiment of the present disclosure will be described with reference to Fig. 9 and the like.

The battery module 100 according to an embodiment of the present disclosure may further include a compression pad section 600 surrounding the thermal conductive resin layer 500. Specifically, the first compression pad section 610 surrounding the first thermal conductive resin layer 510 and the second compression pad section 620 surrounding the second thermal conductive resin layer 520 may be provided. More specifically, on the lower plate 300, the first compression pad section 610 may be disposed so as to surround four sides of the first thermal conductive resin layer 510, and a second compression pad section 620 may be disposed so as to surround four sides of the second thermal conductive resin layer 520.

The compression pad section 600 including the first compression pad section 610 and the second compression pad section 620 may be a foam type pad including polyurethane (PU).

The positions of the first compression pad section 610 and the second compression pad section 620 are adjusted in advance to set a region, and a thermal conductive resin can be applied to the region to form a first thermal conductive resin layer 510 and a second thermal conductive resin layer 520. The positions of the first compression pad section 610 and the second compression pad section 620 can be freely set, so that the horizontal or vertical length of each of the first thermal conductive resin layer 510 and the second thermal conductive resin layer 520 can be easily adjusted. In other words, the first compression pad section 610 and the second compression pad section 620 according to the present embodiment may function as a kind of guide member for adjusting the region to which the thermal conductive resin is applied. That is, since the first compression pad section 610 and the second compression pad section 620 are disposed in advance, it is possible to prevent the thermal conductive resin from being applied outside a predetermined region, so that the thermal conductive resin layer 500 can be precisely realized in a desired region.

Further, since the first compression pad section 610 and the second compression pad section 620 have a predetermined height, it is possible to prevent the injection amount of the thermal conductive resin from overflowing. In particular, in the lower plate 300 of the plate-shaped structure, the first compression pad section 610 and the second compression pad section 620 can prevent the thermal conductive resin from flowing beyond the first edge part 310 or the second edge part 320.

Moreover, the first compression pad section 610 and the second compression pad section 620 include a material to be compressed. Thus, when the battery cell stack 200 is seated thereon, it can be compressed. This may help to make the battery cell stack 200 adhere to the first thermal 1 conductive resin layer 510 and the second thermal conductive resin layer 520, and ultimately, it may lead to an improvement in the fixing force to the battery cell 110 or an improvement in the heat transfer performance through the thermal conductive resin layer 500.

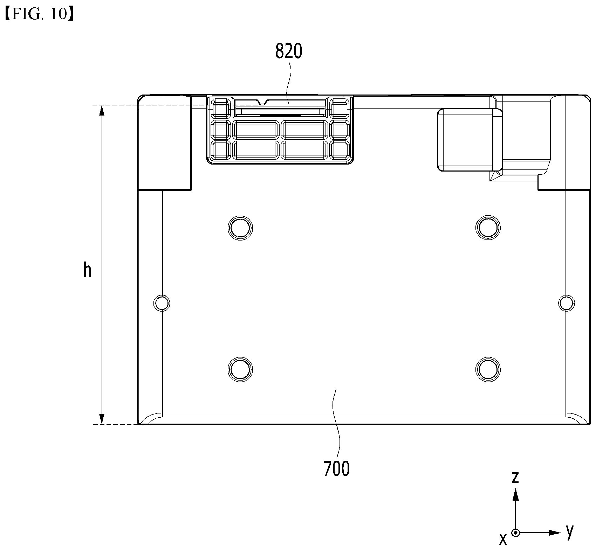

Next, the advantages of dimensional stabilization of the battery module 100 according to an embodiment of the present disclosure will be described with reference to Fig. 10 and the like.

First, referring to Figs. 4 to 6 again, the battery module 100 according to the present embodiment may further include a busbar frame 800 on which a busbar 810 and a terminal busbar 820 are mounted.

The busbar 810 and the terminal busbar 820 may be joined to the electrode leads 111 and 112 of the battery cells 110 in order to electrically connect the plurality of battery cells 110. Specifically, the busbar frame 800 on which the busbar 810 and the terminal busbar 820 are mounted can be disposed on the front surface (x-axis direction) and the rear surface (-x-axis direction) of the battery cell stack 200. The front surface (x-axis direction) and the rear surface (-x-axis direction) of the battery cell stack 200 correspond to the surfaces in the direction in which the electrode leads 111 and 112 of the battery cells 110 protrude. A lead slot may be formed in the busbar frame 800, and the electrode leads 111 and 112 are bent after passing through the lead slot and joined to the busbar 810 or the terminal busbar 820. As long as physical and electrical connection is possible, the joining method is not particularly limited, and weld-joining can be performed as an example.

Meanwhile, a slot may be formed in the busbar 810 or the terminal busbar 820, and the slot may be located correspondingly to the lead slot of the busbar frame 800. The electrode leads 111 and 112 passing through the lead slot may be bent via the slot of the busbar 810 or the slot of the terminal busbar 820 .

Meanwhile, a part of the terminal busbar 820 may be exposed to the outside of the battery module 100. Specifically, an opening part may be formed in the end plate 700 or an insulating cover (not shown), so that a part of the terminal busbar 820 can be exposed as shown in Fig. 4. A part of the exposed terminal busbar 820 may be connected to another battery module or a battery disconnect unit (BDU) to realize a high voltage (HV) connection or the like. Here, the HV connection is a connection that serves as a power source for supplying power, and means a connection between battery cells or a connection between battery modules.

Fig. 10 is a front view of the battery module of Fig. 4 as viewed along the -x axis on the yz plane.

Referring to Figs. 4 and 10, the battery module 100 according to the present embodiment can secure stability for the height direction dimension by adjusting the application amount of the thermal conductive resin and controlling the thickness of the compression pad section 600.

In the case of the conventional battery module 10 shown in Figs. 1 to 3, in the injection process, the battery cell stack 20 may be pushed toward the upper surface of the mono frame 30 by the pressure of the thermal conductive resin, thereby affecting the dimensions of major parts such as terminal busbars. When such battery modules 10 are configured by a plurality of numbers and assembled into a battery pack, the battery modules 10 are connected to each other via a terminal busbar. At this time, if the deviation in the height direction dimension of the terminal busbar is large for each battery module 10, there may be a problem that due to an increase in contact resistance, heat is generated or the voltage value becomes inaccurate.

On the other hand, in the battery module 100 according to the present embodiment, since the thermal conductive resin is applied to the lower plate 300 as described above, the thermal conductive resin layer 500 having a relatively constant thickness can be formed, and the battery cell stack 200 is not pushed. Further, the thickness and the degree of compression of the compression pad section 600 can be calculated to ensure the dimension safety in the height direction of the battery module 100. As an example of the height direction dimension, the height direction dimension h of the terminal busbar 820 may be considered. Considering the thickness of the thermal conductive resin layer 500 (corresponding to the application amount of the thermal conductive resin), the thickness of the compression pad section 600 and the degree of compression of the compression pad section 600, the height direction dimension h of the terminal busbar 820 can be predicted for each battery module 100, and the height direction dimension h of such a terminal busbar 820 can be stabilized so as to show a constant value. In other words, the battery module 100 according to the present embodiment can be easily stabilized so that the height direction dimension h of the terminal busbar for each product shows a constant value, through the method in which the thermal conductive resin is applied, the thickness control of the compression pad section, and the like.

Further, since the configuration of the lower plate 300 is also formed of a plate-shaped structure, processing of the bottom, which is the datum of the battery module 100, is minimized, which can be helpful to ensure the dimensional stability in the height direction.

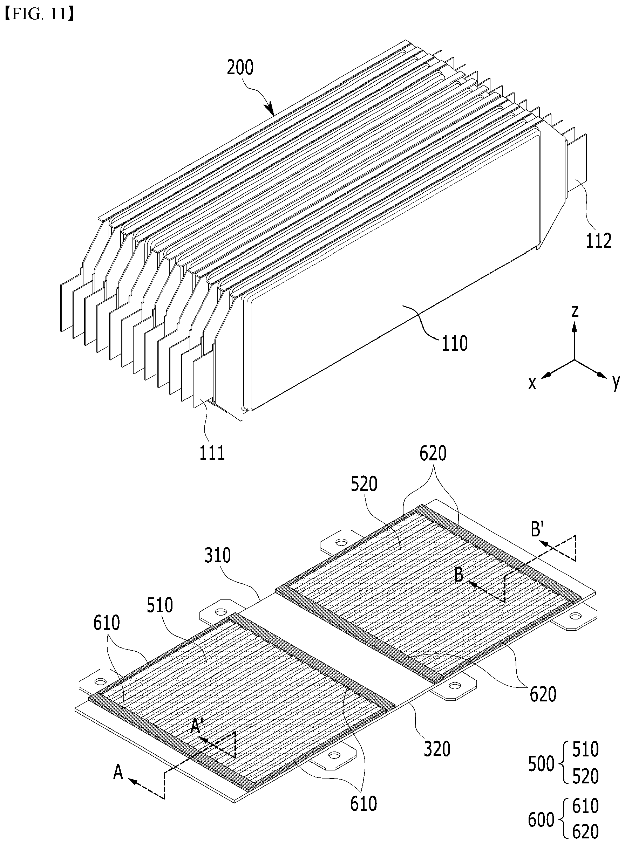

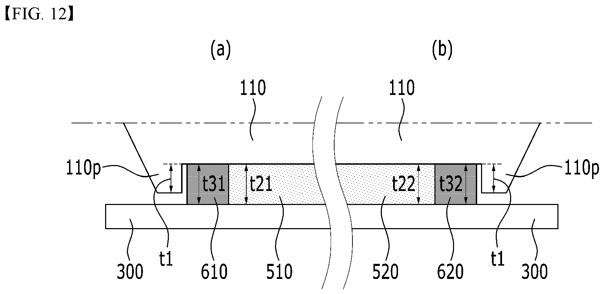

Fig. 11 is a perspective view showing a battery cell stack and a lower plate according to an embodiment of the present disclosure. (a) of Fig. 12 is a cross-sectional view taken along the cutting line A-A' of Fig. 11. (b) of Fig. 12 is a cross-sectional view taken along the cutting line B-B' of Fig. 11. At this time, (a) and (b) pf Fig. 12 show a state in which the battery cell stack is seated on the lower plate.

Referring to Figs. 7, 11, (a) and (b) of 12, as described above, a protrusion part 110p called a bat-ear may be formed in the battery cell 110 according to the present embodiment as described above. Specifically, two protrusion parts 110p may be formed at both end parts of the connection part 115 in the direction in which the electrode leads 111 and 112 protrude.

When the battery cell stack 200 in which the plurality of battery cells 110 are stacked is seated on the compression pad section 600 and the thermal conductive resin layer 500, the protrusion part 110p may be located outside the compression pad section 600. That is, the protrusion part 110p is located closer to one end part of the lower plate 300 than the compression pad section 600, so that the compression pad section 600 can be disposed between the protrusion part 110p and the thermal conductive resin layer 500. Specifically, any one of the protrusion parts 110p may be located closer to one end part of the lower plate in the direction in which the electrode leads 111 protrude than the first compression pad section 610. The other protrusion part 110p may be located closer to the other end part of the lower plate in the direction in which the electrode lead 112 protrudes than the second compression pad section 620. Here, the both end parts of the lower plate 300 may refer to end parts in contact with the first edge part 310 and the second edge part 320.

Since the protrusion part 110p of the battery cell 110 has a protruding shape, there may be a problem in that the portion is damaged when the battery cell stack is seated. At this time, the compression pad section 600 according to the present embodiment is located on the lower plate 300, so that a space in which the protrusion part 110p of the battery cell 110 can be located can be naturally provided. Therefore, it is possible to prevent problems such as damage to the battery cells 110 including the protrusion part 110p when the battery cell stack 200 is seated. For this purpose, the thicknesses t31 and t32 of the compression pad section 600 according to the present embodiment may be thicker than the protrusion thickness t1 of the protrusion part 110p. Specifically, both the thickness t31 of the first compression pad section 610 and the thickness t32 of the second compression pad section 620 may be thicker than the protrusion thickness t1 of the protrusion part 110p. Here, the protrusion thickness t1 of the protrusion part 10p may mean a length at which the protrusion part 110p protrudes from the connection part 115 of the battery cell 110.

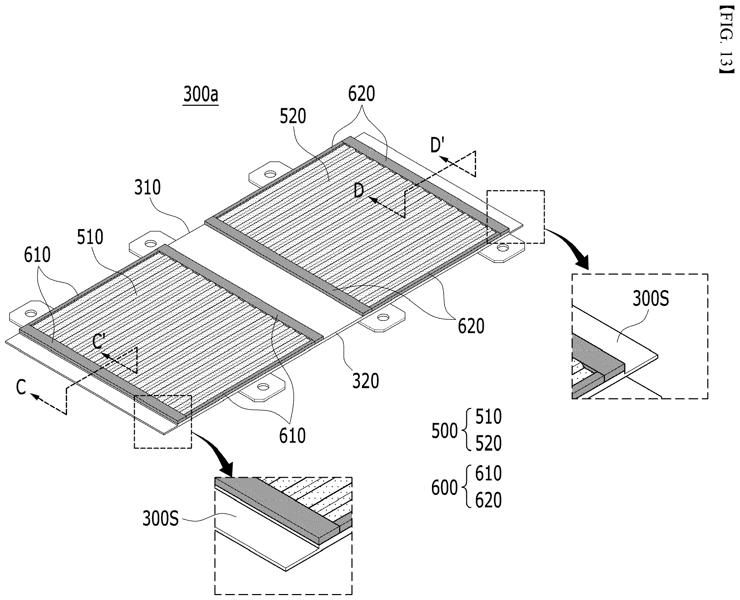

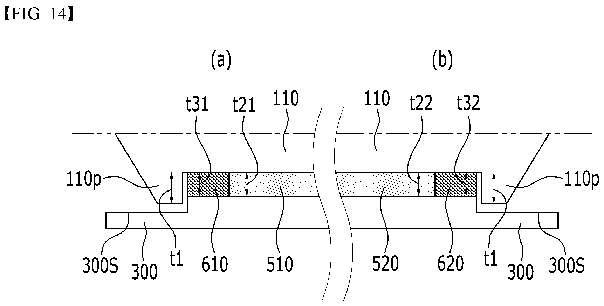

Fig. 13 is a perspective view showing a lower plate 300a according to a modified embodiment of the present disclosure. (a) of Fig. 14 is a cross-sectional view taken along the cutting line C-C' of Fig. 13, and (b) of Fig. 14 is a cross-sectional view taken along the cutting line D-D' of Fig. 13. At this time, (a) and (b) of Fig. 14 show a state in which the battery cell stack is seated on the lower plate.

Referring to Figs. 7, 13, (a) and (b) of 14 and 14, the lower plate 300a according to a modified embodiment of the present disclosure may include stepped part 300S formed at both end parts. Specifically, the stepped part 300S may be formed at both end parts of the lower plate 300a in both directions in which the electrode leads 111 and 112 of the battery cells 110 protrude. Here, the stepped part 300S may mean a portion of the lower plate 300a that is thinner than other portions. Here, the both end parts of the lower plate 300a may refer to end parts in contact with the first edge part 310 and the second edge part 320.

When the battery cell stack 200 in which the plurality of battery cells 110 are stacked is seated on the compression pad section 600 and the thermal conductive resin layer 500, the protrusion part 110p may be located on the stepped part 300S. Specifically, the protrusion part 110p located on the outside of the compression pad section 600 may be located above the stepped part 300S and spaced apart from the stepped part 300S. Any one of the protrusion parts 110p is located on any one of the stepped parts 300S, and another protrusion part 110p may be located on the other stepped part 300S.

As the stepped part 300S is formed on the lower plate 300a according to the present embodiment, the thickness t31 and t32 of the compression pad section 600 may be thinner than the protrusion thickness t1 of the protrusion part 110p. That is, both the thickness t31 of the first compression pad section 610 and the thickness t32 of the second compression pad section 620 may be thinner than the protrusion thickness t1 of the protrusion part 110p. By providing the stepped pat 300S, even if the thicknesses t31 and t32 of the compression pad section 600 and the thicknesses t21 and t22 of the thermal conductive resin layer 500 are thinly formed, a space in which the protrusion part 110p of the battery cell 110 can be located may be provided. Considering the thicknesses t31 and t32 of the compression pad section 600, the thicknesses t21 and t22 of the thermal conductive resin layer 500, and the protrusion thickness t1 of the protrusion part 11 Op, the step depth of the stepped part 300S may be set. Here, the step depth may mean a difference between the thickness of the stepped part 300S and the thickness of the other lower plate 300a on which the stepped part 300S is not formed.

Meanwhile, referring back to (a) and (b) of Fig. 12, (a) and (b) of 14, the thicknesses t21 and t22 of the thermal conductive resin layer 500 are equal to or thinner than the thicknesses t31 and t32 of the compression pad section 600. Specifically, the thickness t21 of the first thermal conductive resin layer 510 may be equal to or thinner than the thickness t31 of the first compression pad section 610, and the thickness t22 of the second thermal conductive resin layer 520 may be equal to or thinner than a thickness t32 of the second compression pad section 620.

As described above, the first compression pad section 610 and the second compression pad section 620 can prevent the injection amount of the heat conductive resin from overflowing and can be compressed according to the seating of the battery cell stack 200. That is, the thicknesses t21 and t22 of the thermal conductive resin layer 500 may be equal to or thinner than the thicknesses t31 and t32 of the compression pad section 600, wherein the compression pad section 600 may be compressed due to the battery cell stack 200, and the battery cell stack 200 may be in close contact with the thermal conductive resin layer 500.

Even though the terms indicating directions such as upper, lower, left, right, front and rear directions are used in the present embodiments, it would be obvious to those skilled in the art that these merely represent relative positions for convenience in explanation and may vary depending on a position of an observer, a position of an object, or the like.

The one or more battery modules according to the present embodiments described above can be mounted together with various control and protection systems such as a battery management system (BMS) and a cooling system to form a battery pack.

The battery module or the battery pack can be applied to various devices. Specifically, these devices can be applied to vehicle means such as an electric bicycle, an electric vehicle, a hybrid vehicle, but the present disclosure is not limited thereto and can be applied to various devices that can use the secondary battery.

Although the preferred embodiments of the present disclosure have been described in detail above, the scope of the present disclosure is not limited thereto, and various modifications and improvements made by those skilled in the art using the basic concepts of the present disclosure defined in the following claims also falls within the spirit and scope of the present disclosure.

### [Description of Reference Numerals]

200: battery cell stack
300: lower plate
400: module frame
500: thermal conductive resin layer
600: compression pad section

## Claims

1. A battery module comprising:
a battery cell stack in which a plurality of battery cells are stacked;
a plate-shaped lower plate located under the battery cell stack;
a module frame for covering an upper surface and both side surfaces of the battery cell stack; and
a thermal conductive resin layer located between the lower plate and the battery cell stack.

2. The battery module according to claim 1, wherein:
the module frame comprises a first side surface part and a second side surface part for covering the both side surfaces of the battery cell stack; and a ceiling part for covering the upper surface of the battery cell stack.

3. The battery module according to claim 2, wherein:
the first side surface part, the second side surface part and the ceiling part are integrally formed.

4. The battery module according to claim 2, wherein:
a first edge part and a second edge part of the lower plate facing each other are joined to the first side surface part and the second side surface part, respectively.

5. The battery module according to claim 4, wherein:
the first edge part and the second edge part are weld-joined to the first side surface part and the second side surface part, respectively.

6. The battery module according to claim 1, wherein:
the lower plate comprises a mounting part, and
the mounting part is formed on a first edge part and a second edge part of the lower plate facing each other.

7. The battery module according to claim 6, wherein:
a mounting hole is formed in the mounting part, and
the mounting part is extended in parallel to one surface of the lower plate.

8. The battery module according to claim 1, wherein:
the thermal conductive resin layer is formed by applying a thermal conductive resin to the lower plate.

9. The battery module according to claim 1,
the battery module further comprises a compression pad section that surrounds the thermal conductive resin layer.

10. The battery module according to claim 9, wherein:
the battery cell comprises electrode leads protruding in mutually opposite directions and a protrusion part formed on one edge of the battery cell, and
the protrusion part is located closer to one end part of the lower plate in a direction in which one of the electrode leads is protruded than the compression pad section.

11. The battery module according to claim 10, wherein:
the lower plate comprises a stepped part formed at the one end part of the lower plate, and
the protrusion part is located above the stepped part.

12. The battery module according to claim 9, wherein:
a thickness of the thermal conductive resin layer is equal to or thinner than a thickness of the compression pad section.

13. The battery module according to claim 1, wherein:
the thermal conductive resin layer comprises a first thermal conductive resin layer and a second thermal conductive resin layer that are located apart from each other.

14. The battery module according to claim 13,
the battery module further comprises a first compression pad section surrounding the first thermal conductive resin layer and a second compression pad section surrounding the second thermal conductive resin layer.

15. A battery pack comprising the battery module as set forth in claim 1.
